# EUROPÄISCHE PATENTSCHRIFT

(11) **EP 4 085 158 B1**
(45) Veröffentlichungstag und Bekanntmachung des Hinweises auf die Patenterteilung: **31.05.2023**
(21) Anmeldenummer: 20724424.5
(22) Anmeldetag: 22.04.2020
(51) Int. Cl.: C23C 10/50, F16D 65/12

(54) **VERSCHLEISS- UND KORROSIONSSCHUTZ AUFWEISENDE BREMSSCHEIBE UND VERFAHREN ZU DEREN HERSTELLUNG**
BRAKE DISC PROVIDED WITH PROTECTION FROM WEAR AND CORROSION AND METHOD FOR PRODUCTION THEREOF
DISQUE DE FREIN DOTÉ D'UNE PROTECTION CONTRE L'USURE ET LA CORROSION ET SON PROCÉDÉ DE PRODUCTION

(30) Priorität: 30.12.2019 DE 202019107269 U
(43) Veröffentlichungstag der Anmeldung: 09.11.2022
(73) Patentinhaber: C4 Laser Technology GmbH, 01705 Freital (DE)
(72) Erfinder: STEINMEIER, Tilo, 01737 Pohrsdorf (DE)
(74) Vertreter: Rauschenbach, Marion
(86) Internationale Anmeldenummer: PCT/EP2020/061221
(87) Internationale Veröffentlichungsnummer: WO 2021/008744

(56) Entgegenhaltungen:
- DE-A1-102009 008 114
- DE-A1-102014 008 844
- US-A1- 2014 060 983

## Beschreibung

Die vorliegende Erfindung bezieht sich auf das Gebiet der Fahrzeugtechnik und der Industrieanlagentechnik und betrifft eine einen Verschleiß- und Korrosionsschutz aufweisende Bremsscheibe und ein Verfahren zu deren Herstellung. Die erfindungsgemäß hergestellte Bremsscheibe kann beispielsweise in Fahrzeugen oder als Bremssystem für Industriebremsen oder in Windkraftanlagen eingesetzt werden.

Herkömmliche Bremsscheiben in Fahrzeugen und bei industriellen Anwendungen sind entweder als Bremsscheibe in einteiliger Form aus einem metallischen oder keramischen Werkstoff oder als Verbundbremsscheibe beziehungsweise mehrteilige Bremsscheibe aus einem oder mehreren metallischen oder keramischen Materialien ausgebildet.

Dabei weisen Bremsscheiben mehrere funktionelle Bereiche auf. So werden Bremsscheiben bei Kraftfahrzeugen an die Vorder- und Hinterachsen angeschraubt und weisen hierfür eine plane Anlagefläche auf, die im Kontakt mit der Felge einerseits und dem Radlager andererseits steht. Die gesamte Bremsscheibe wird über die Anlagefläche mittels Radbolzen verbunden.

Zudem weisen Bremsscheiben Bereiche mit Reibflächen auf, über die die Bremswirkung im Zusammenwirken mit reibenden Bremsbelägen realisiert wird.

Zur besseren Ableitung der entstehenden Wärme können die Bremsscheiben beispielsweise als innenbelüftete Scheibenbremsen ausgebildet sein. Hierzu weisen sie an der Innenseite des Bremsscheibentopfes entsprechende Belüftungskanäle auf, die Luft ansaugen, die Scheibenbremse durchströmen, Wärme ableiten und so die Kühlung der Bremsscheibe gewährleisten.

Bremsscheiben werden im Stand der Technik entweder im Bereich der Reibflächen mit einem Kurzzeitkorrosionsschutz oder im Bereich der Belüftungskanäle mit einem Langzeitkorrosionsschutz versehen. Der Kurzzeitkorrosionsschutz schützt die Bremsscheibe nur für einen kurzen Zeitraum gegenüber Korrosion.

Aus dem Stand der Technik sind verschiedene Lösung bekannt, um Bremsscheiben vor Korrosion und Verschleiß zu schützen.

Aus der DE 20 2018 107 169 U1 ist eine Beschichtung insbesondere für Bremsscheiben, Bremstrommeln und Kupplungsscheiben mit einer ersten Schicht bekannt, die einen metallbasierten Werkstoff aufweist, der weniger als 20 Gew.-% Wolframcarbid oder andere Carbide enthält, und eine zweite Schicht, die auf der ersten Schicht aufgebracht ist und einen Wolframcarbid-haltigen Werkstoff aufweist, der 20 Gew.-% bis 94 Gew.-% Wolframcarbid enthält, wobei die erste und die zweite Schicht thermisch gespritzte Schichten sind.

Dokument DE 10 2014 008844 A1offenbart eine Bremsscheibe für ein Kraftfahrzeug umfassend ein Grauguss-Substrat, mindestens eine auf dem Substrat gebildete Reibfläche und mindestens eine zumindest an der mindestens einen Reibfläche aufgebrachte Deckschicht.

Aus der DE 20 2018 102 703 U1 ist ein Bremskörper für ein Fahrzeug bekannt, mit einem Grundkörper, der eine durch Aufrauen ausgebildete Oberfläche als Reibfläche und eine nach erfolgtem Aufrauen mittels eines thermischen Spritzverfahrens auf die Reibfläche aufgebrachte Beschichtung aufweist.

Auch bekannt aus der DE 20 2018 102 704 U1 ist ein Bremskörper für ein Fahrzeug, mit einem Grundkörper, der eine als Reibfläche ausgebildete erste Oberfläche, eine als Grundfläche ausgebildete und benachbart zu der Reibfläche angeordnete zweite Oberfläche und eine auf die Grundfläche aufgebrachte Grundflächenbeschichtung aufweist.

Zudem ist aus der DE 102 03 507 A1 eine Bremsscheibe für ein Fahrzeug bekannt, umfassend einen Grundkörper aus einem metallischen Werkstoff, insbesondere Grauguss, welcher wenigstens eine Reibfläche mit einer Beschichtung aus einem harten Material aufweist, wobei der Grundkörper unter der Beschichtung eine abgetragene Materialstärke in Richtung achsparallel zur Achse der Bremsscheibe aufweist, wobei der Grundkörper eine etwa um die Schichtdicke der Beschichtung, beziehungsweise bis zu +/- 20% mehr oder weniger, vorzugsweise +/- 10%, bezogen auf die Schichtdicke der Beschichtung abgetragene Materialstärke in Richtung achsparallel zur Achse der Bremsscheibe aufweist.

Nachteilig bei den bekannten Lösungen ist es, dass die Korrosions- und Verschleißschutzbeschichtung oberflächig auf den Reibflächen der Bremsscheibe aufgebracht ist und unmittelbar bei den ersten Bremsvorgängen abgerieben wird, so dass die Reibfläche nach kurzer Zeit korrodieren und durch die korrosiven Prozesse unmittelbar den Grundwerkstoff beschädigen. Gerade bei beispielsweise Elektrofahrzeugen oder Hybridfahrzeugen ist mit einer stark reduzierten Anzahl von Reinigungsbremsungen zu rechnen, was einen erhöhten Korrosionsansatz verursacht und daraus resultierend zwangsläufig zu Fehlfunktionen führt. Diese Fehlfunktionen zeigen sich mit Geräuschproblemen und können im Extremfall zu einem Verlust der Bremsleistung führen. Zudem besteht ein weiterer Nachteil darin, dass durch die auftretende Korrosion im Bereich der Reibflächen die Reibflächen schneller verschleißen.

Nachteilig sind auch die hohen Material- und Herstellungskosten von hartstoffbeschichteten Bremsscheiben mit Schichtsystemen auf der Basis von Carbiden, wie zum Beispiel Wolfrmcarbid, Chromcarbid oder Borcarbid.

Die Aufgabe der vorliegenden Erfindung besteht in der Bereitstellung einer Bremsscheibe, die einen verbesserten und dauerhaften Korrosions- und Verschleißschutz aufweist.

Die Aufgabe wird durch die in den Patentansprüchen angegebene Erfindung gelöst. Vorteilhafte Ausgestaltungen sind Gegenstand der Unteransprüche, wobei die Erfindung auch Kombinationen der einzelnen abhängigen Patentansprüche im Sinne einer Und-Verknüpfung einschließt, solange sie sich nicht gegenseitig ausschließen.

Gelöst wird die erfindungsgemäße Aufgabe mit einer Bremsscheibe, aufweisend einen metallischen Grundkörper aus Stahl oder Grauguss, der mindestens einen Bereich mit ausgebildeten Reibflächen und mindestens einen Bereich mit einer ausgebildeten Anlagefläche zur Befestigung der Bremsscheibe aufweist, wobei innerhalb des metallischen Grundkörpers mindestens im Bereich der Reibflächen eine aus Eisen, Aluminium und Silizium ausgebildete Diffusionsschicht vorhanden ist, die eine Schichtdicke von 0,1mm bis 0,6mm aufweist und im Zusammenwirken mit dem Stahl oder Grauguss des metallischen Grundkörpers durch Diffusionsprozesse ausgebildet ist.

Vorteilhafterweise ist ein Bremsscheibe vorhanden, bei der zusätzlich Belüftungskanäle vorhanden sind.

In einer vorteilhaften Ausgestaltung ist die Diffusionsschicht als gradiertes Schichtsystem aus Eisen und Aluminium in der Schichtdicke ausgebildet ist, wobei Silizium homogen verteilt im gradierten Schichtsystem vorliegt, wobei besonders vorteilhaft bei der das gradierte Schichtsystem derart ausgebildet ist, dass der Anteil an Eisen kontinuierlich zur Schichtoberfläche abnimmt und der Anteil an Aluminium kontinuierlich zur Schichtoberfläche zunimmt.

Vorteilhaft ist es, wenn mindestens die Diffusionsschicht durch Beschichten des metallischen Grundkörpers mit einer AlSi₁₂- und/oder AlSi₆- Legierung und nachfolgendes thermisches Behandeln gebildet ist.

Ebenso vorteilhafterweise ist, wenn zusätzlich der Bereich der Anlagefläche und/oder die Belüftungskanäle die Diffusionsschicht aufweisen.

Auch ist vorteilhaft, wenn die Diffusionsschicht eine größere Härte gegenüber der Härte des Materials des metallischen Grundkörpers aufweist.

In einer vorteilhaften Ausführung der Bremsscheibe ist die Diffusionsschicht mittels einer thermischen Behandlung bei 250°C bis 650°C und einer Behandlungsdauer von 40 bis 300 Minuten ausgebildet.

Vorteilhafterweise weisen die Belüftungskanäle die Diffusionsschicht und eine Al-basierte Oberflächenschicht mit eine Schichtdicke von 0,01 mm - 0,4mm auf.

Vorteilhaft ist es auch, wenn mindestens innerhalb der Diffusionsschicht farbgebende Substanzen vorhanden sind.

Gelöst wird die Erfindung auch mit einem Verfahren zur Herstellung der erfindungsgemäßen Bremsscheibe, bei dem die Oberfläche des metallischen Grundkörpers mindestens im Bereich der ausgebildeten Reibflächen mechanisch bearbeitet wird, nachfolgend mittels eines Beschichtungsverfahrens eine AlSi-basierte Legierung mindestens im Bereich der ausgebildeten Reibflächen angeordnet wird, nachfolgend eine thermische Behandlung der Bremsscheibe unter Schutzgasatmosphäre durchgeführt wird, und abschließend die Oberfläche des metallischen Grundkörpers mindestens im Bereich der Reibflächen mechanisch bearbeitet wird.

Vorteilhafterweise werden zusätzlich die Anlagefläche und/oder die Belüftungskanäle mit einer AlSi-basierten Legierung beschichtet.

Auch vorteilhaft ist es, wenn die Beschichtung mit einer AlSi₁₂- oder AlSi₆- Legierung realisiert wird.

In einer vorteilhaften Ausgestaltung des Verfahrens wird die mechanische Bearbeitung und/oder das Beschichtungsverfahren unter Schutzgasatmosphäre durchgeführt wird. In einer weiteren vorteilhaften Ausgestaltung des Verfahrens wird die thermische Behandlung der Bremsscheibe bei einer Behandlungsdauer von 40 bis 300 Minuten und einer Temperatur von 250°C bis 650°C, besonders vorteilhaft bei einer Temperatur von 550°C bis 600°C durchgeführt.

Verfahren nach mindestens einem der vorhergehenden Ansprüche 9 bis 13, bei dem die Bremsscheibe vor dem Beschichten auf eine Temperatur von 250°C bis 650°C unter Schutzgasatmosphäre vorgewärmt wird.

Zudem wird in einer vorteilhaften Ausgestaltung des Verfahrens die Bremsscheibe vor dem Beschichten auf eine Temperatur von 150°C bis 200°C ohne Schutzgasatmosphäre vorgewärmt.

Und auch vorteilhafterweise wird die Beschichtung mittels Lichtbogendrahtspritzen, modifiziertem Lichtbogendrahtspritzen mit gesteigerter kinetischer Energie der Splats, Hochgeschwindigkeits-Drahtflammspritzen, Flüssig-Alumimnium-Tauchen, Lack-Tauchen, Lack-Spritzen, Laser-Pulver-Auftragsschweißen, Pulver-Spritzen oder galvanischer Beschichtung realisiert.

Weiterhin ist vorteilhaft, wenn nach der Beschichtung mit einem Lack eine erste induktive Erwärmung der Bremsscheibe auf eine Temperatur von 250°C bis 650°C über einen Zeitraum von 5 bis 240 Sekunden realisiert wird.

Und auch vorteilhafterweise werden vor oder während der Beschichtung farbgebende Substanzen zugeführt werden, mit denen innerhalb der Diffusionsschicht (3) mindestens im Bereich der Reibflächen (2) Farbmarkierungen erzeugt werden.

Mit der vorliegenden Erfindung ist es erstmals gelungen, eine Bremsscheibe mit verbesserten Korrosions- und Verschleißschutzeigenschaften bereitzustellen, die ohne zusätzliche Schicht auf dem metallischen Grundkörper hergestellt ist. Die verbesserten Verschleiß- und Korrosionsschutzeigenschaften werden mindestens im Bereich der Reibflächen erreicht, wobei auch der Bereich der Anlagefläche und/oder die Belüftungskanäle den erfindungsgemäßen Verschleiß- und Korrosionsschutz aufweisen können.

Im Rahmen der Erfindung soll unter einer Bremsscheibe ein Bauteil eines Bremssystems verstanden werden, das aus einem metallischen Grundkörper besteht und unterschiedliche funktionalisierte Bereiche wie diametral angeordnete Reibflächen, eine Anlagefläche und durch Stege ausgebildete Belüftungskanäle aufweist.

Unter einem metallischen Grundkörper soll im Rahmen der Erfindung die ausgebildete Bremsscheibe mit den funktionalisierten Bereichen verstanden werden, die erfindungsgemäß aus Stahl oder Grauguss hergestellt ist.

Unter Reibflächen soll im Rahmen der Erfindung ein- oder zweiseitig ausgebildete scheibenartige Flächen verstanden werden, über die im Zusammenwirken mit passend ausgebildeten Bremsbelägen die Bremswirkung erreicht wird.

Unter einer Anlagefläche soll im Rahmen der Erfindung der Bereich des metallischen Grundkörpers verstanden werden, der mit einer Felge eines Rades und/oder mit einem Radlager oder einer Welle in Kontakt steht und mit diesem in der Regel kraftschlüssig verbunden ist.

Unter Belüftungskanäle sollen im Rahmen der Erfindung Bereiche des metallischen Grundkörpers verstanden werden, die zwischen zwei Reibflächen ausgebildet sind und den Wärmeaustrag aus der Bremsscheibe und damit die Kühlung der Bremsscheibe bewirken. Die Belüftungskanäle sind durch Stege gebildet, die die diametral gegenüberliegenden Bereiche der Reibflächen verbinden. Die Belüftungskanäle können auch in den Reibflächen als Bohrungen oder Schlitze ausgebildet sein.

Die wesentlich verbesserten Korrosions- und Verschleißschutzeigenschaften der Bremsscheibe werden erfindungsgemäß dadurch erreicht, dass mindestens der Bereich der Reibflächen eine AlSi-basierte Diffusionsschicht aufweist, die eine Schichtdicke von 0,1mm bis 0,6mm aufweist und im Zusammenwirken mit dem Stahl oder Grauguss des metallischen Grundkörpers ausgebildet ist.

Es wurde festgestellt, dass bei der Beschichtung von Bremsscheiben das Entstehen von Eisenoxiden nachteilig für die Ausbildung eines Verschleiß- und Korrosionsschutzes ist, da die auf der metallischen Grundkörperoberfläche gebildeten Eisenoxide verschlechterte Haftungsbedingungen bereitstellen, die einerseits die Bildung von Eisenaluminiden be- oder verhindern und zudem ein sprödes Abplatzen der Verschleiß- und Korrosionsschutzschicht auslösen.

Um dies zu verhindern, wird erfindungsgemäß vorgeschlagen, in einem ersten Verfahrensschritt den metallischen Grundkörper mindestens im Bereich der Reibflächen vor dem Beschichten mit der AlSi-basierten Legierung mechanisch zu bearbeiten, wobei vorteilhafterweise vorgeschlagen wird, die mechanische Bearbeitung durch zweimaliges Sandstrahlen in und entgegen der Drehrichtung mit Korund bei einem Strahlwinkel von ca. 45° durchzuführen. Dadurch wird eine vergrößerte Oberfläche mindestens im Bereich der Reibflächen hergestellt, die verbesserte Haftungs- und Diffusionsbedingungen für die zu erzeugende Verschleiß- und Korrosionsschutzschicht ermöglichen.

Besonders vorteilhaft ist es, wenn die mechanische Bearbeitung des metallischen Grundkörpermaterials unter Schutzgasatmosphäre erfolgt, um während und nach der mechanischen Bearbeitung der Oberfläche die sofortige Bildung von Eisenoxiden zu verhindern. Als Schutzgas können beispielhaft Argon oder Stickstoff eingesetzt werden. Besonders vorteilhaft wird zudem vorgeschlagen, sämtliche Verfahrensschritte unter Schutzgasatmosphäre durchzuführen, um jegliche Oxidationsprozesse zu verhindern, die nachteilig für ein gewünschtes Wachstum der erfindungsgemäßem Diffusionsschicht und die gewünschte Schichtdicke von 0,1mm bis 0,6mm sind.

Erfindungsgemäß wird vorgeschlagen, nach der mechanischen Bearbeitung der Oberfläche des metallischen Grundkörpers eine AlSi-basierte Legierung mindestens im Bereich der Reibflächen auf das Material des metallischen Grundkörpers aufzutragen. Vorteilhafterweise kann die Beschichtung des metallischen Grundkörpers mit der AlSi-basierten Legierung ebenfalls unter Schutzgasatmosphäre erfolgen, um weiterhin der Bildung von Eisenoxiden entgegenzuwirken.

Durch die Anwendung eines thermischen Beschichtungsverfahrens wird es möglich, eine besonders feinkörnige und gut haftende AlSi-basierte Schicht mindestens im Bereich der Reibflächen zu erzeugen, um nachfolgend mittels einer thermischen Behandlung die erfindungsgemäße Diffusionsschicht im Material des metallischen Grundkörpers realisieren zu können.

Erfindungsgemäß konnte herausgefunden werden, dass mit einer AlSi-basierten Legierungszusammensetzung als Beschichtungsmaterial ein besonders vorteilhafter Verschleiß- und Korrosionsschutz erreicht wird, der durch die erfindungsgemäße thermische Behandlung bei einer Temperaturen von 250°C - 650°C, bevorzugt bei 550°C bis 600°, und einer Behandlungsdauer von 40 bis 300 Minuten innerhalb des metallischen Grundkörpermaterials durch Diffusion erzeugt wird und überraschenderweise auch dauerhaft bei wiederkehrenden Bremsvorgängen erhalten bleibt.

Der vorteilhafte Temperaturbereich von 550°C bis 600°C führt dazu, dass die Diffusionsgeschwindigkeit bei der Erzeugung der Diffusionsschicht gesteigert wird und gleichzeitig das aufgetragene Material unterhalb des Schmelzpunktes gehalten wird. Ein Wegfliesen der aufgetragenen AlSi-basierten Legierung vom metallischen Grundkörper wird vermieden.

Von besonderem Vorteil für das Auslösung der Diffusionsprozesse ist es, wenn die Bremsscheibe vor dem Beschichten auf eine Temperatur von 250°C bis 650°C unter Schutzgasatmosphäre vorgewärmt wird. Es wurde festgestellt, dass bei einer Temperatur über 200°C beim Vorwärmen unerwünschte Eisenoxide entstehen, die durch den Einsatz einer Schutzgasatmosphäre verhindert werden.

Ein Verzicht auf den Einsatz von Schutzgas beim Vorwärmen der Bremsscheibe ist überraschenderweise dann möglich, wenn die Vorwärmtemperatur lediglich bei 150°C bis 200°C eingestellt wird.

Die aus Eisen, Aluminium und Silizium gewachsene Diffusionsschicht ist erfindungsgemäß jedoch nicht, wie aus dem Stand der Technik bekannt, eine auf der Oberfläche des metallischen Grundkörpers angeordnete Verschleiß- und Korrosionsschutzschicht. Vielmehr wird mindestens im Bereich der Reibflächen der Verschleiß- und Korrosionsschutz ausschließlich durch eine reine Diffusionsschicht bereitgestellt, die durch die gezielte thermische Behandlung der auf dem metallischen Grundkörper beschichteten AlSi-basierten Legierung durch Diffusionsprozesse ausgebildet ist.

Erfindungsgemäß konnte überraschend festgestellt werden, dass durch den Anteil an Silizium als Legierungsbestandteil während der thermischen Behandlung homogene Silizium-Kristalle in der Diffusionsschicht ausgeschieden werden, die im Zusammenwirken mit dem Aluminium zu einer besonders homogenen und harten Diffusionsschicht führen. Der herausgefundene Anteil an Silizium an der AlSi-basierten Legierung hat den weiteren Vorteil, dass in besonders vorteilhafter Weise Sauerstoff gebunden wird und damit Oxidationsprozesse mit dem Material des metallischen Grundkörpers durch Bildung von Eisenoxiden verhindert werden. Die verhinderte Eisenoxidbildung ermöglicht ein ungestörtes und schnelles Wachstum von Eisenaluminiden im Material des Grundkörpers mit einer Schichtdicke von 0,1mm bis 0,6mm.

Weiterhin wurde festgestellt, dass durch den vorgeschlagenen Anteil an Silizium eine unerwünschte Oxidation des Aluminiums im oberflächennahen Bereich der Reibflächen verhindert wird. Dabei wird der in der Diffusionsschicht eingelagerte Sauerstoff, welcher ein effektives Wachstum der gewünschten Eisenaluminide verhindern könnte, durch den eingesetzten Anteil an Silizium in der AlSi-basierten Legierung reduziert.

Für die Qualität der später durch Diffusion erzeugten Schicht ist es von Bedeutung, dass die aufgetragene AlSi-basierte Schicht in sich möglichst dicht und die Oberfläche des metallischen Grundkörpers gut benetzt ist. Hierzu ist es von Vorteil, wenn Schmelztröpfchen (Splats) der aufzutragenden AlSi-basierten Legierung mit hoher kinetischer Energie auf die Oberfläche des metallischen Grundkörpers auftreffen. Dies wird insbesondere durch die Beschichtungsverfahren Lichtbogen-Drahtspritzen, modifiziertes Lichtbogendraht-Spritzen mit gesteigerter kinetischer Energie der Splats, Hochgeschwindigkeits-Flammspritzen (HVOF) oder Hochgeschwindigkeits-Drahtflammspritzen erreicht.

Durch die thermisch initiierten Diffusionsprozesse entsteht eine aus Eisenaluminiden gebildete Diffusionsschicht mit einer wesentlich höheren Oberflächenhärte. Üblicherweise eingesetztes Material des metallischen Grundkörpers ist Stahl oder Grauguss, der eine Oberflächenhärte von ca. 220HV aufweist.

Mit dem Eindiffundieren der AlSi-basierten Legierung in das Material des metallischen Grundkörpers ergibt sich überraschenderweise eine wesentlich höhere Oberflächenhärte von 350HV bis 850HV zumindest an den mechanisch nachbehandelten Reibflächen. Die ermittelte Härte konnte dabei über die gesamte Diffusionszone festgestellt werden. Die besondere technische Wirkung der festgestellten Härte der Diffusionsschicht besteht darin, dass ein reduzierter Abrieb der Bremsscheibe erreicht wird, was sich positiv auf die Standzeit der Bremsscheibe auswirkt und zudem die Feinstaubemission signifikant reduziert.

Ein weiterer Vorteil der ausgebildeten Diffusionsschicht besteht darin, dass eine Haftvermittlung zwischen einem metallischem Grundkörper und einer darauf aufgetragenen Verschleiß- und Korrosionsschicht entfallen kann, da die AlSi-basierte Legierung direkt auf das Material des metallischen Grundkörpers beschichtet wird und dort direkt durch die thermisch initiierten Diffusionsprozesse als Eisenaluminide durch intermetallische Prozesse mit dem Material des metallischen Grundkörpers aufwächst. Ein Abplatzen oder Lösen der Verschleiß- und Korrosionsschutzschicht der Oberfläche des metallischen Grundkörpers wird damit verhindert.

Mit der Diffusionsschicht und dem Zusammenwirken von Bremsbelag, Bremsscheibe und Bremssattel ergibt sich zudem eine positive Verschiebung der Dämpfungsfaktoren und der Eigenfrequenzen. Die verbesserten Funktionseigenschaften werden nun über die Diffusionstiefe und - härte aktiv bei der Bremsscheibe erreicht. Eigenfrequenzen und Dämpfungsfaktoren werden reduziert und dadurch ein in Fachkreisen bezeichnetes Rubbeln oder auftretende Geräusche der Bremsscheibe bei Bremsvorgängen zumindest reduziert.

Als besonders vorteilhaftes Verfahren für die Beschichtung des metallischen Grundkörpers mit der AlSi-basierten Legierung hat sich das Lichtbogen-Drahtspritzen, Tauchen, Lack-Spritzen, Laser-Pulver-Auftragsschweißen oder Pulver-Spritzen erwiesen, insbesondere auch dann, wenn vor dem Auftragen der AlSi-basierten Legierung der metallische Grundkörper erwärmt wird. Durch das vorherige Erwärmen des metallischen Grundkörpers werden die Diffusionsprozesse schneller eingeleitet und das Wachstum der Eisenaluminde innerhalb der metallischen Grundkörpers gefördert.

Mit der abschließenden mechanischen Bearbeitung der Oberfläche im Bereich der Reibflächen und der Anlagefläche nach der thermischen Behandlung wird der technische Effekt erreicht, dass die überschüssige Al-basierte Oberflächenschicht beseitigt wird und im Gegensatz zu bekannten gasnitrierten Bremsscheiben die erfindungsgemäße Bremsscheibe sowohl mit NAO Bremsbelägen (Non Asbestos Organic) als auch mit Low Met Bremsbeläge (Low Metallic) eingesetzt werden kann.

Mit der abschließend mechanischen Bearbeitung kann zudem ein möglicher Verzug der Bremsscheibe in einfacher Weise korrigiert werden, ohne dass dabei die verbesserten Verschleiß- und Korrosionseigenschaften entfernt werden. Zudem wird durch die abschließende mechanische Bearbeitung erreicht, dass ein zusätzlicher Arbeitsgang zur Beseitigung von Unwuchten entfallen kann.

Mit der neuartigen Bremsscheibe werden ganz wesentliche Nachteile der heute im Markt befindlichen Bremsscheiben beseitigt. So ist bekannt, dass die Höhe des Bremsbelages kleiner als die Höhe der Reibfläche der Bremsscheibe ist.

Bekannte Bremsscheiben werden deshalb am Außenumfang der Reibflächen mit einer umlaufenden Fase versehen, um das Einlaufen des Bremsbelages in die Reibfläche und eine nachfolgend bedingte erschwerte und aufwendige Demontage der Reibbeläge aus der Bremseinheit zu vermeiden. Die Ausbildung einer Fase am Außenumfang der Reibflächen ist jedoch mit einem zusätzlichen Arbeitsgang bei der Herstellung der Reibflächen und damit zusätzlichen Fertigungskosten verbunden.

Durch die erfindungsgemäße Bremsscheibe, die mindestens im Bereich der Reibflächen die erfindungsgemäße AlSi-basierte und aus Eisenaluminiden gebildete Diffusionsschicht aufweist, wird dieser Nachteil beseitigt, da durch die besondere Härte von 350HV bis 850HV ein Einlaufen der Bremsbeläge in die Reibflächen vermieden wird.

In einer vorteilhaften Ausgestaltung der Erfindung können bei der Bremsscheibe neben den Reibflächen auch der Bereich der Anlagefläche und die Belüftungskanäle mit der erfindungsgemäßen AlSi-basierten Legierung versehen und die erfindungsgemäße Diffusionsschicht ausgebildet sein.

Das Herstellung des Verschleiß- und Korrosionsschutzes im Bereich der Anlagefläche bietet den technischen Vorteil, dass beispielsweise bei einer Bremsscheibe das Setzungsverhalten bei der kraftstoffschlüssigen Verbindung mit der Achse eines Fahrzeuges deutlich reduziert wird. Ein Durchrutschen der Bremsscheibe bis zur Anlage an die Radbolzen wird dadurch vermieden.

Die Herstellung eines Verschleiß- und Korrosionsschutzes im Bereich der Belüftungskanäle führt dazu, dass die glatte Oberfläche der Belüftungskanäle aufgrund der geringen Korrosionsneigung, insbesondere auch beim Einwirken von winterlichen Salzlösungen, erhalten bleibt und ein dauerhaftes reibungsfreies Durchströmen der Belüftungskanäle und damit eine gleichbleibend gute Wärmeabführung bei Bremsvorgängen ermöglicht wird.

Durch das thermisch initiierte Eindiffundieren der AlSi-basierten Legierung in den Guss- oder Stahlwerkstoff bei den ausgebildeten Verbindungsstegen der Belüftungskanäle wird es erstmals möglich, die Verbindungsstege mit geringerer Wandstärke zu dimensionieren. Es ist bekannt, dass die bisher aus dem Stand der Technik bekannten Verbindungsstege unter Berücksichtigung des fehlenden Korrosionsschutzes und des damit erhöhten Verschleißes eine Mindestwandstärke von 5mm aufweisen müssen.

Durch den erfindungsgemäßen Verschleiß- und Korrosionsschutz im Bereich der Belüftungskanäle wird eine signifikante Reduzierung der Mindestgeometrie um ca. 40% bis 50% möglich, wodurch erstmalig eine gewichtsoptimierte und kostengünstigere Bremsscheibe bereitgestellt wird.

Vorstellbar ist es, dass ausschließlich die lokalen Bereiche der Bremsscheibe gezielt thermisch behandelt, die mit der erfindungsgemäßen AlSi-basierten Legierung beschichtet sind. Dadurch wird erreicht, dass ausschließlich in diesen Bereichen Diffusionsprozesse aktiviert werden und so die Bremsscheibe gezielt funktionalisiert wird. So besteht die Möglichkeit, dass nur in dem Bereich des Materials des metallischen Grundkörpers eine gezielte thermische Behandlung realisiert wird, in denen ein verbesserter Verschleiß- und Korrosionsschutz erreicht werden soll. Eine vollständige thermische Behandlung der gesamten Bremsscheibe ist damit nicht notwendig, wodurch die Herstellung der erfindungsgemäßen Bremsscheibe kostengünstiger und zeitsparender wird.

In einer besonders vorteilhaften Ausgestaltung der Bremsscheibe und des Herstellungsverfahrens werden vor oder während der Beschichtung farbgebende Substanzen zugeführt, mit denen innerhalb der Diffusionsschicht Farbmarkierungen erzeugt werden. Damit wird erreicht, dass insbesondere im Bereich der Reibflächen in der Diffusionsschicht Farbschattierungen erzeugt werden, die beispielsweise als Verschleißindikator eingesetzt und verwendet werden können. Möglich ist aber auch, dass die farbgebenden Substanzen Temperaturindikatoren darstellen und Aufschluss über die Betriebstemperatur der Bremsscheibe beispielsweise der Reibflächen geben.

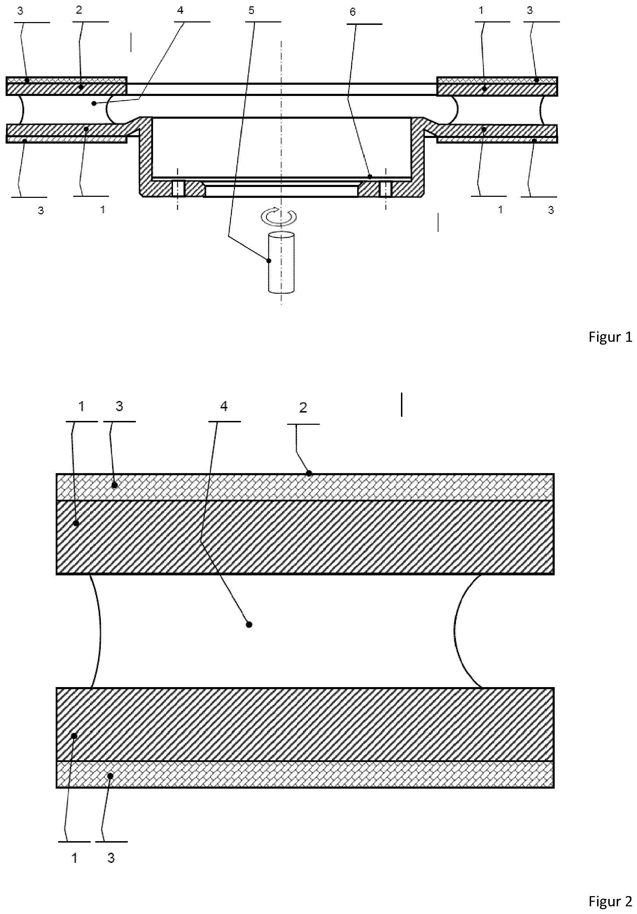

Nachfolgend soll die Erfindung anhand eines Ausführungsbeispiels näher erläutert werden. Dabei zeigen
- Fig. 1: - schematische Ansicht eines Querschnittes durch einen Bremsscheibe und
- Fig. 2: - schematische Teilansicht der Bremsscheibe mit Diffusionsschicht.

Eine innenbelüftete Bremsscheibe eines Fahrzeuges aus Grauguss wird bereitgestellt, die eine Härte von 220 HV aufweist. Die Bremsscheibe weist zwei voneinander diametral gegenüberliegend angeordnete Reibflächen 2 sowie eine Anlagefläche 6 für die Befestigung der Bremsscheibe an einer Achse auf. Die beiden Reibflächen 2 sind durch stegartig ausgebildete Belüftungskanäle 4 verbunden. Mittels Korund (99,81% Al₂O₃, 0,1% Na₂O,0,04% TiO₂, 0,02% SiO₂, 0,03% Fe₂O₃) und unter Anwendung einer Stickstoff-Schutzgasatmosphäre wird die Oberfläche der beiden Reibflächen 2 zweimalig in und entgegen der Drehrichtung der Bremsscheibe bei einem Winkel von 45° mechanisch bearbeitet und dadurch Verschmutzungen, Eisenoxide entfernt, um verbesserte Diffusionsbedingungen für die nachfolgende Ausbildung der Diffusionsschicht bereitzustellen. Zudem wird die lamellare Struktur des Graugusses im oberflächennahen Bereich verändert und beseitigt.

Anschließend wird die Bremsscheibe einer Beschichtungsanlage zugeführt und unter Stickstoff-Schutzgasatmosphäre mittels Lichtbogen-Drahtspritzen im Bereich der Reibflächen 2, der Anlagefläche 6 sowie der Belüftungskanäle 4 mit einer AlSi₁₂-Legierung mit einer Schichtdicke von 0,4 mm beschichtet. Nach der Beschichtung wird in einem Ofen eine thermische Behandlung unter Argon-Schutzgasatmosphäre der gesamten Bremsscheibe vorgenommen. Die thermische Behandlung wird bei 580°C für 240 Minuten durchgeführt und anschließend die Bremsscheibe abgekühlt. Durch die thermische Behandlung hat sich eine Diffusionsschicht 3 von Eisenaluminiden mit einer Schichtdicke von 170µm bis 200µm sowie eine Al-basierte Oberflächenschicht mit einer Schichtdicke von ca. 50µm ausgebildet.

Die überschüssige Al-basierte Oberflächenschicht wird im Bereich der Reibflächen 2 und der Anlagefläche 6 anschließend mittels Schleifen mechanisch bearbeitet und bis zur Diffusionsschicht 3 abgetragen, sodass im Bereich der Reibflächen 2 und der Anlagefläche 6 ausschließlich die Diffusionsschicht 3 aus gewachsenen Eisenaluminiden verbleibt. Silizium liegt in der Diffusionsschicht homogen verteilt vor. Im Bereich der Belüftungskanäle 4 erfolgt keine mechanische Bearbeitung der Oberflächen.

Die Reibflächen 2, Anlagefläche 6 sowie die Belüftungskanäle 4 weisen eine Härte von 350 HV auf und weisen Langzeit-Verschleiß- und Korrosionsschutz auf.

### Bezugszeichenliste

- 1 -: metallischer Grundkörper
- 2 -: Reibfläche
- 3 -: Diffusionsschicht
- 4 -: Belüftungskanäle
- 5 -: rotierende Achse
- 6 -: Anlagefläche

## Patentansprüche

1. Bremsscheibe, aufweisend einen metallischen Grundkörper (1) aus Stahl oder Grauguss, der mindestens einen Bereich mit ausgebildeten Reibflächen (2) und mindestens einen Bereich mit einer ausgebildeten Anlagefläche (6) zur Befestigung der Bremsscheibe aufweist, wobei innerhalb des metallischen Grundkörpers (1) mindestens im Bereich der Reibflächen (2) eine aus Eisen, Aluminium und Silizium ausgebildete Diffusionsschicht (3) vorhanden ist, die eine Schichtdicke von 0,1mm bis 0,6mm aufweist und im Zusammenwirken mit dem Stahl oder Grauguss des metallischen Grundkörpers (1) durch Diffusionsprozesse ausgebildet ist.

2. Bremsscheibe nach Anspruch 1, bei der zusätzlich Belüftungskanäle vorhanden sind.

3. Bremsscheibe nach Anspruch 1 oder 2, bei der die Diffusionsschicht (3) als gradiertes Schichtsystem aus Eisen und Aluminium in der Schichtdicke ausgebildet ist, wobei Silizium homogen verteilt im gradierten Schichtsystem vorliegt, wobei besonders das gradierte Schichtsystem derart ausgebildet ist, dass der Anteil an Eisen kontinuierlich zur Schichtoberfläche abnimmt und der Anteil an Aluminium kontinuierlich zur Schichtoberfläche zunimmt, wobei Silizium homogen verteilt im gradierten Schichtsystem vorliegt.

4. Bremsscheibe nach mindestens einem der vorhergehenden Ansprüche, bei der mindestens die Diffusionsschicht (3) durch Beschichten des metallischen Grundkörpers (1) mit einer AlSi₁₂- und/oder AlSi₆- Legierung und nachfolgendes thermisches Behandeln gebildet ist.

5. Bremsscheibe nach mindestens einem der vorhergehenden Ansprüche, bei der zusätzlich der Bereich der Anlagefläche (6) und/oder die Belüftungskanäle (4) die Diffusionsschicht (3) aufweisen, wobei besonders vorteilhaft die Diffusionsschicht (3) eine größere Härte gegenüber der Härte des Materials des metallischen Grundkörpers (1) aufweist.

6. Bremsscheibe nach mindestens einem der vorhergehenden Ansprüche, bei der die Diffusionsschicht (3) mittels einer thermischen Behandlung bei 250°C bis 650°C und einer Behandlungsdauer von 40 bis 300 Minuten ausgebildet ist.

7. Bremsscheibe nach mindestens einem der vorhergehenden Ansprüche, bei der die Belüftungskanäle (4) die Diffusionsschicht (3) und eine Al-basierte Oberflächenschicht mit eine Schichtdicke von 0,01mm - 0,4mm aufweisen.

8. Bremsscheibe nach mindestens einem der vorhergehenden Ansprüche, bei der mindestens innerhalb der Diffusionsschicht (3) farbgebende Substanzen vorhanden sind.

9. Verfahren zur Herstellung der nach mindestens einem der Anspruch 1 bis 8 beanspruchten Bremsscheibe, bei dem die Oberfläche des metallischen Grundkörpers (1) mindestens im Bereich der ausgebildeten Reibflächen (2) mechanisch bearbeitet wird, nachfolgend mittels eines Beschichtungsverfahrens eine AlSi-basierte Legierung mindestens im Bereich der ausgebildeten Reibflächen (2) angeordnet wird, nachfolgend eine thermische Behandlung der Bremsscheibe unter Schutzgasatmosphäre durchgeführt wird, und abschließend die Oberfläche des metallischen Grundkörpers (1) mindestens im Bereich der Reibflächen (2) mechanisch bearbeitet wird.

10. Verfahren nach Anspruch 9, bei dem zusätzlich die Anlagefläche (6) und/oder die Belüftungskanäle (4) mit einer AlSi-basierten Legierung beschichtet werden, wobei besonders vorteilhaft die Beschichtung mit einer AlSi₁₂- oder AlSi₆-Legierung realisiert wird.

11. Verfahren nach einem der vorhergehenden Ansprüche 9 oder 10, bei dem die mechanische Bearbeitung und/oder das Beschichtungsverfahren unter Schutzgasatmosphäre durchgeführt wird.

12. Verfahren nach mindestens einem der vorhergehenden Ansprüche 9 bis 11, bei dem die thermische Behandlung der Bremsscheibe bei einer Behandlungsdauer von 40 bis 300 Minuten und einer Temperatur von 250°C bis 650°C, besonders vorteilhaft bei einer Temperatur von 550°C bis 600°C durchgeführt wird, wobei besonders vorteilhaft die Bremsscheibe vor dem Beschichten auf eine Temperatur von 250°C bis 650°C unter Schutzgasatmosphäre vorgewärmt wird.

13. Verfahren nach mindestens einem der vorhergehenden Ansprüche 9 bis 12, bei dem die Bremsscheibe vor dem Beschichten auf eine Temperatur von 150°C bis 200°C ohne Schutzgasatmosphäre vorgewärmt wird.

14. Verfahren nach mindestens einem der vorhergehenden Ansprüche 9 bis 13, bei dem die Beschichtung mittels Lichtbogendrahtspritzen, modifiziertem Lichtbogendrahtspritzen mit gesteigerter kinetischer Energie der Splats, Hochgeschwindigkeits-Drahtflammspritzen, Flüssig-Alumimnium-Tauchen, Lack-Tauchen, Lack-Spritzen, Laser-Pulver-Auftragsschweißen, Pulver-Spritzen oder galvanischer Beschichtung realisiert wird, wobei besonders vorteilhaft nach der Beschichtung mit einem Lack eine erste induktive Erwärmung der Bremsscheibe auf eine Temperatur von 250°C bis 650°C über einen Zeitraum von 5 bis 240 Sekunden realisiert wird.

15. Verfahren nach mindestens einem der vorhergehenden Ansprüche 9 bis 14, bei dem vor oder während der Beschichtung farbgebende Substanzen zugeführt werden, mit denen innerhalb der Diffusionsschicht (3) mindestens im Bereich der Reibflächen (2) Farbmarkierungen erzeugt werden.

## Claims

1. Brake disk having a main metallic body (1) made of steel or grey iron, having at least one region with formed friction surfaces (2) and at least one region with a formed contact surface (6) for securing of the brake disk, wherein a diffusion layer (3) formed from iron, aluminium and silicon is present within the main metallic body (1) at least in the region of the friction surfaces (2), which diffusion layer has a layer thickness of 0.1 mm to 0.6 mm and is formed collectively with the steel or grey iron of the main metallic body (1) via diffusion processes.

2. Brake disk according to Claim 1, in which ventilation ducts are additionally present.

3. Brake disk according to Claim 1 or 2, in which the diffusion layer (3) takes the form of a gradated layer system composed of iron and aluminium in the layer thickness, wherein silicon is distributed homogeneously in the gradated layer system, wherein the gradated layer system is particularly formed in such a way that the proportion of iron decreases continuously toward the layer surface and the proportion of aluminium increases continuously toward the layer surface, with silicon distributed homogeneously in the gradated layer system.

4. Brake disk according to at least one of the preceding claims, in which at least the diffusion layer (3) is formed by coating the main metallic body (1) with an AlSi₁₂ and/or AlSi₆ alloy, followed by thermal treatment.

5. Brake disk according to at least one of the preceding claims, in which the region of the contact surface (6) and/or the ventilation ducts (4) additionally have the diffusion layer (3), wherein the diffusion layer (3) particularly advantageously has a greater hardness compared to the hardness of the material of the main metallic body (1).

6. Brake disk according to at least one of the preceding claims, in which the diffusion layer (3) is formed by means of a thermal treatment at 250°C to 650°C and a treatment duration of 40 to 300 minutes.

7. Brake disk according to at least one of the preceding claims, in which the ventilation ducts (4) have the diffusion layer (3) and an Al-based surface layer having a layer thickness of 0.01 mm-0.4 mm.

8. Brake disk according to at least one of the preceding claims, in which colouring substances are present at least within the diffusion layer (3).

9. Process for producing the brake disk according to at least one of Claims 1 to 8, in which the surface of the main metallic body (1) is mechanically processed at least in the region of the formed friction surfaces (2), then an AlSi-based alloy is disposed at least in the region of the formed friction surfaces (2) by means of a coating process, then a thermal treatment of the brake disk is conducted under protective gas atmosphere, and finally the surface of the main metallic body (1) is mechanically processed at least in the region of the friction surfaces (2).

10. Process according to Claim 9, in which the contact surface (6) and/or the ventilation ducts (4) are additionally coated with an AlSi-based alloy, where the coating is particularly advantageously implemented with an AlSi₁₂ or AlSi₆ alloy.

11. Process according to either of the preceding Claims 9 and 10, in which the mechanical treatment and/or the coating method is conducted under a protective gas atmosphere.

12. Process according to at least one of the preceding Claims 9 to 11, in which the thermal treatment of the brake disk is conducted for a treatment duration of 40 to 300 minutes and at a temperature of 250°C to 650°C, particularly advantageously at a temperature of 550°C to 600°C, where the brake disk is particularly advantageously preheated prior to the coating to a temperature of 250°C to 650°C under a protective gas atmosphere.

13. Process according to at least one of the preceding Claims 9 to 12, in which the brake disk is preheated prior to the coating to a temperature of 150°C to 200°C without a protective gas atmosphere.

14. Process according to at least one of the preceding Claims 9 to 13, in which the coating is implemented by means of arc wire spraying, modified arc wire spraying with increased kinetic energy of the splat, high-velocity wire flame spraying, liquid aluminium dipping, paint dipping, paint spraying, laser powder buildup welding, powder spraying or electrocoating, where coating with a paint is particularly advantageously followed by implementation of a first inductive heating of the brake disk to a temperature of 250°C to 650°C over a period of 5 to 240 seconds.

15. Process according to at least one of the preceding Claims 9 to 14, in which colouring substances are fed in before or during the coating, and these are used to create colour markings within the diffusion layer (3) at least in the region of the friction surfaces (2) .

## Revendications

1. Disque de frein, présentant un corps de base métallique (1) en acier ou en fonte grise, qui présente au moins une zone avec des surfaces de friction (2) formées et au moins une zone avec une surface d'appui (6) formée pour la fixation du disque de frein, une couche de diffusion (3) formée de fer, d'aluminium et de silicium étant présente à l'intérieur du corps de base métallique (1) au moins dans la zone des surfaces de friction (2), laquelle couche présente une épaisseur de couche de 0,1 mm à 0,6 mm et est formée par des processus de diffusion en coopération avec l'acier ou la fonte grise du corps de base métallique (1).

2. Disque de frein selon la revendication 1, dans lequel des canaux d'aération sont en outre présents.

3. Disque de frein selon la revendication 1 ou 2, dans lequel la couche de diffusion (3) est formée en tant que système de couches gradué en fer et en aluminium dans l'épaisseur de couche, le silicium étant réparti de manière homogène dans le système de couches gradué, le système de couches gradué étant en particulier réalisé de telle sorte que la proportion de fer diminue continuellement vers la surface de la couche et la proportion d'aluminium augmente continuellement vers la surface de la couche, le silicium étant réparti de manière homogène dans le système de couches gradué.

4. Disque de frein selon au moins l'une quelconque des revendications précédentes, dans lequel au moins la couche de diffusion (3) est formée par revêtement du corps de base métallique (1) avec un alliage AlSi₁₂ et/ou AlSi₆, et traitement thermique consécutif.

5. Disque de frein selon au moins l'une quelconque des revendications précédentes, dans lequel la zone de la surface d'appui (6) et/ou les canaux d'aération (4) présentent en outre la couche de diffusion (3), la couche de diffusion (3) présentant de manière particulièrement avantageuse une dureté supérieure à la dureté du matériau du corps de base métallique (1).

6. Disque de frein selon au moins l'une quelconque des revendications précédentes, dans lequel la couche de diffusion (3) est formée au moyen d'un traitement thermique à une température de 250 °C à 650 °C et pendant une durée de traitement de 40 à 300 minutes.

7. Disque de frein selon au moins l'une quelconque des revendications précédentes, dans lequel les canaux d'aération (4) présentent la couche de diffusion (3) et une couche de surface à base d'Al ayant une épaisseur de couche de 0,01 mm à 0,4 mm.

8. Disque de frein selon au moins l'une quelconque des revendications précédentes, dans lequel des substances colorantes sont présentes au moins à l'intérieur de la couche de diffusion (3).

9. Procédé de fabrication du disque de frein revendiqué selon au moins l'une quelconque des revendications 1 à 8, dans lequel la surface du corps de base métallique (1) est usinée mécaniquement au moins dans la zone des surfaces de friction (2) formées, ensuite, au moyen d'un procédé de revêtement, un alliage à base d'AlSi est agencé au moins dans la zone des surfaces de friction (2) formées, ensuite, un traitement thermique du disque de frein est effectué sous atmosphère gazeuse protectrice, et enfin, la surface du corps de base métallique (1) est usinée mécaniquement au moins dans la zone des surfaces de friction (2).

10. Procédé selon la revendication 9, dans lequel la surface d'appui (6) et/ou les canaux d'aération (4) sont en outre revêtus d'un alliage à base d'AlSi, le revêtement étant réalisé de manière particulièrement avantageuse avec un alliage AlSi₁₂ ou AlSi₆.

11. Procédé selon l'une quelconque des revendications 9 ou 10 précédentes, dans lequel l'usinage mécanique et/ou le procédé de revêtement sont effectués sous atmosphère gazeuse protectrice.

12. Procédé selon au moins l'une quelconque des revendications 9 à 11 précédentes, dans lequel le traitement thermique du disque de frein est effectué pendant une durée de traitement de 40 à 300 minutes et à une température de 250 °C à 650 °C, de manière particulièrement avantageuse à une température de 550 °C à 600 °C, le disque de frein étant de manière particulièrement avantageuse préchauffé à une température de 250 °C à 650 °C sous atmosphère gazeuse protectrice avant le revêtement.

13. Procédé selon au moins l'une quelconque des revendications 9 à 12 précédentes, dans lequel le disque de frein est préchauffé à une température de 150 °C à 200 °C sans atmosphère gazeuse protectrice avant le revêtement.

14. Procédé selon au moins l'une quelconque des revendications 9 à 13 précédentes, dans lequel le revêtement est réalisé par projection à l'arc électrique, par projection à l'arc électrique modifiée avec augmentation de l'énergie cinétique des éclats, par projection à la flamme à grande vitesse, par trempage dans de l'aluminium liquide, par trempage dans de la laque, par projection de laque, par soudage par dépôt de poudre laser, par pulvérisation de poudre ou par revêtement galvanique, un premier chauffage par induction du disque de frein à une température de 250 °C à 650 °C pendant une durée de 5 à 240 secondes étant réalisé de manière particulièrement avantageuse après le revêtement avec une laque.

15. Procédé selon au moins l'une quelconque des revendications 9 à 14 précédentes, dans lequel des substances colorantes sont ajoutées avant ou pendant le revêtement, avec lesquelles des marquages colorés sont produits à l'intérieur de la couche de diffusion (3) au moins dans la zone des surfaces de friction (2).
